(19) Europäisches Patentamt
European Patent Office
Office européen des brevets

(11) EP 4 302 906 A1

(12) EUROPEAN PATENT APPLICATION
published in accordance with Art. 153(4) EPC

(43) Date of publication:
**10.01.2024 Bulletin 2024/02**

(21) Application number: **22763234.6**

(22) Date of filing: **01.03.2022**

(51) International Patent Classification (IPC):
***B22F 10/10*** *(2021.01)* ***B22F 1/102*** *(2022.01)*
***B29C 64/106*** *(2017.01)* ***B29C 64/314*** *(2017.01)*
***B29C 64/336*** *(2017.01)* ***B29C 64/35*** *(2017.01)*
***B29C 64/40*** *(2017.01)* ***B33Y 10/00*** *(2015.01)*
***B33Y 40/00*** *(2020.01)* ***B33Y 40/20*** *(2020.01)*
***B33Y 70/10*** *(2020.01)*

(52) Cooperative Patent Classification (CPC):
**B22F 1/102; B22F 10/10; B29C 64/106; B29C 64/314; B29C 64/336; B29C 64/35; B29C 64/40; B33Y 10/00; B33Y 40/00; B33Y 40/20; B33Y 70/10;** Y02P 10/25

(86) International application number:
**PCT/JP2022/008516**

(87) International publication number:
**WO 2022/186179 (09.09.2022 Gazette 2022/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.03.2021 JP 2021035571**

(71) Applicant: **Kao Corporation**
**Chuo-ku**
**Tokyo 103-8210 (JP)**

(72) Inventors:
- **ONOUE, Akihiro**
  **Wakayama-shi, Wakayama 640-8580 (JP)**
- **YOSHIMURA, Tadanori**
  **Wakayama-shi, Wakayama 640-8580 (JP)**
- **KANZAWA, Tomofumi**
  **Toyohashi-shi, Aichi 441-8074 (JP)**

(74) Representative: **Hoffmann Eitle**
**Patent- und Rechtsanwälte PartmbB**
**Arabellastraße 30**
**81925 München (DE)**

# (54) COMPOSITE MATERIAL

(57) The present invention is a composite material containing: a resin α including an aromatic dicarboxylic acid monomer unit A having a hydrophilic group and a dicarboxylic acid monomer unit B having no hydrophilic group; a resin β that is a resin other than the resin α; and metal compound particles γ, wherein a content of the metal compound particles γ is 50 parts by mass or more and 500 parts by mass or less with respect to 100 parts by mass of a total content of the resin α and the resin β. According to the present invention, it is possible to provide a composite material that has high moisture resistance and enables obtaining a composite material molded body from which a resin can be removed with neutral water, a method for producing a three-dimensional object using the composite material, and a method for producing a metal-compound three-dimensional object including little residual organic matter.

EP 4 302 906 A1

## Description

TECHNICAL FIELD

The present invention relates to a composite material, a method for producing a three-dimensional object, and a method for producing a metal-compound three-dimensional object.

BACKGROUND ART

Known techniques for shaping of a three-dimensional object containing a metal include an additive manufacturing method, a press molding method, and an injection molding method. As the additive manufacturing method, for example, fused deposition molding (FDM), binder jetting, and selective laser sintering (SLS) are known.

In the additive manufacturing method, metal particles are stacked in a state of a composite material containing the metal particles and a resin to form a laminate, the resin is removed from the laminate, and then the metal particles are subjected to sintering or the like to shape a three-dimensional object (for example, see JP-A-2010-202928, JP-T-2018-536770, and JP-T-2020-501022).

SUMMARY OF THE INVENTION

A composite material according to the present invention is a composite material containing:

a resin $\alpha$ including an aromatic dicarboxylic acid monomer unit A having a hydrophilic group and a dicarboxylic acid monomer unit B having no hydrophilic group;
a resin $\beta$ that is a resin other than the resin $\alpha$; and
metal compound particles $\gamma$,
wherein a content of the metal compound particles $\gamma$ is 50 parts by mass or more and 500 parts by mass or less with respect to 100 parts by mass of a total content of the resin $\alpha$ and the resin $\beta$.

A method for producing a three-dimensional object according to the present invention is a method for producing a three-dimensional object containing a metal compound, the method containing:

a molding step of molding the composite material to obtain a composite material molded body; and
a removing step of removing the resin $\alpha$ from the composite material molded body by bringing the composite material molded body into contact with neutral water.

A method for producing a metal-compound three-dimensional object according to the present invention sinters a three-dimensional object containing a metal compound obtained by the method for producing a three-dimensional object containing a metal compound.

DETAILED DESCRIPTION OF THE INVENTION

In the technique described in JP-A-2010-202928, the resin is removed from the laminate by heating the laminate in the presence of an inert gas to decompose the resin, but treatment of the decomposed gas costs much.

In the techniques described in JP-T-2018-536770 and JP-T-2020-501022, the resin is removed from the laminate, for example, by immersing the laminate in an organic solvent or the like, but use of an organic solvent is restricted in various ways from the viewpoint of work environment.

In the technique described in JP-T-2020-501022, the resin contained in the composite material is exemplified by polyethylene glycol. It is considered that polyethylene glycol can be removed by immersing the laminate in water because polyethylene glycol is water-dispersible. However, polyethylene glycol is impractical because a generalpurpose water-dispersible resin such as polyethylene glycol has low moisture resistance and therefore the three-dimensional object tends to have low shaping accuracy.

The metal-compound three-dimensional object produced by the technique described in JP-A-2010-202928 tends to include a relatively large amount of residual organic matter derived from the resin.

The present invention provides a composite material that has high moisture resistance and enables obtaining a composite material molded body from which a resin can be removed with neutral water, a method for producing a three-dimensional object using the composite material, and a method for producing a metal-compound three-dimensional object including little residual organic matter.

A composite material according to the present invention is a composite material containing:

a resin $\alpha$ including an aromatic dicarboxylic acid monomer unit A having a hydrophilic group and a dicarboxylic acid monomer unit B having no hydrophilic group;
a resin $\beta$ that is a resin other than the resin $\alpha$; and
metal compound particles $\gamma$,
wherein a content of the metal compound particles $\gamma$ is 50 parts by mass or more and 500 parts by mass or less with respect to 100 parts by mass of a total content of the resin $\alpha$ and the resin $\beta$.

A method for producing a three-dimensional object according to the present invention is a method for producing a three-dimensional object containing a metal compound, the method containing:

a molding step of molding the composite material to obtain a composite material molded body; and
a removing step of removing the resin $\alpha$ from the composite material molded body by bringing the composite material molded body into contact with neutral water.

A method for producing a metal-compound three-dimensional object according to the present invention sinters a three-dimensional object containing a metal compound obtained by the method for producing a three-dimensional object containing a metal compound.

According to the present invention, it is possible to provide a composite material that has high moisture resistance and enables obtaining a composite material molded body from which a resin can be removed with neutral water, a method for producing a three-dimensional object using the composite material, and a method for producing a metal-compound three-dimensional object including little residual organic matter.

One embodiment according to the present invention is explained below.

<Composite material>

The composite material of the present embodiment is a composite material containing:

a resin $\alpha$ including an aromatic dicarboxylic acid monomer unit A having a hydrophilic group and a dicarboxylic acid monomer unit B having no hydrophilic group;
a resin $\beta$ that is a resin other than the resin $\alpha$; and
metal compound particles $\gamma$,
wherein a content of the metal compound particles $\gamma$ is 50 parts by mass or more and 500 parts by mass or less with respect to 100 parts by mass of a total content of the resin $\alpha$ and the resin $\beta$. The composite material of the present embodiment has high moisture resistance and enables obtaining a composite material molded body from which a resin can be removed with neutral water. The reason why the composite material exhibits such an effect is not clear, but is presumed as follows.

The resin $\alpha$ includes the aromatic dicarboxylic acid monomer unit having a hydrophilic group, and therefore has water dispersibility. Meanwhile, it is considered that the resin $\alpha$ is extremely highly dispersed in the composite material of the embodiment because the dicarboxylic acid monomer unit having no hydrophilic group interacts with the resin $\beta$, so that localization of the resin $\alpha$ to the vicinity of the surface of the composite material is suppressed. In addition, it is considered that the hydrophilic group interacts with the metal compound particles $\gamma$ and thus is inhibited from adsorbing moisture in the air, so that the composite material molded body exhibits moisture resistance and a shaping property accompanying the moisture resistance. When the composite material molded body is brought into contact with neutral water to disperse the resin $\alpha$ from the composite material molded body into the neutral water, voids are generated, and thus a three-dimensional object containing a metal compound and increased voids is obtained. It is considered that at the time of sintering the three-dimensional object, the voids facilitate supply of oxygen to the inside of the three-dimensional object to reduce the burnt residue of the resin $\beta$ at the time of sintering, and as a result, a metal-compound three-dimensional object including little residual organic matter can be produced. In the present description, the term "resin having water dispersibility" means a resin that can be dispersed in neutral water by bringing the resin into contact with neutral water to dissolve the resin in the neutral water or collapse a structure constituted by the resin.

[Resin $\alpha$]

[Aromatic dicarboxylic acid monomer unit A]

The resin $\alpha$ includes an aromatic dicarboxylic acid monomer unit having a hydrophilic group (in the present description, also simply referred to as a hydrophilic group) other than a hydrophilic group that constitutes the polymerization involving the generation of the resin α. In the present description, the aromatic dicarboxylic acid monomer unit having a hydrophilic group included in the resin α is referred to as an aromatic dicarboxylic acid monomer unit A. The aromatic dicarboxylic acid from which the aromatic dicarboxylic acid monomer unit A is derived is referred to as an aromatic dicarboxylic acid A.

Examples of the hydrophilic group include at least one selected from the group consisting of a primary amino group, a secondary amino group, a tertiary amino group, a quaternary ammonium base, an oxyalkylene group, a hydroxyl group, a carboxyl group, a carboxylate group, a phosphoric acid group, a phosphate group, a sulfonic acid group, and a sulfonate group from the viewpoint of removing the resin α contained in the composite material molded body with neutral water and the viewpoint of improving the moisture resistance of the composite material. Among them, at least one selected from the group consisting of a quaternary ammonium base, an oxyalkylene group, a carboxylate group, a phosphate group, and a sulfonate group are preferable, at least one selected from the group consisting of a quaternary ammonium base, an oxyalkylene group, and a sulfonate group are more preferable, and a sulfonate group is still more preferable from the same viewpoints.

The sulfonate group is preferably a sulfonate group represented by $-SO_3M$ (M represents a counter ion of a sulfonic acid group that constitutes a sulfonate group, and from the viewpoint of removing the resin α contained in the composite material molded body with neutral water and the viewpoint of improving the moisture resistance of the composite material, M is preferably at least one selected from the group consisting of a metal ion and an ammonium ion, more preferably at least one selected from the group consisting of a metal ion, still more preferably at least one selected from the group consisting of an alkali metal ion and an alkaline earth metal ion, still more preferably at least one selected from the group consisting of an alkali metal ion, still more preferably at least one selected from the group consisting of a sodium ion and a potassium ion, and still more preferably a sodium ion.) from the viewpoint of removing the resin α contained in the composite material molded body with neutral water and the viewpoint of improving the moisture resistance of the composite material.

The content of the hydrophilic group in the resin α is preferably 0.5 mmol/g or more, more preferably 0.6 mmol/g or more, and still more preferably 0.7 mmol/g or more from the viewpoint of removing the resin α contained in the composite material molded body with neutral water, and is preferably 3 mmol/g or less, more preferably 2 mmol/g or less, and still more preferably 1.5 mmol/g or less from the viewpoint of improving the moisture resistance of the composite material. In the present specification, the content of the hydrophilic group can be measured by the method described in Examples.

The aromatic dicarboxylic acid A is preferably one or more selected from the group consisting of aromatic dicarboxylic acids having a hydrophilic group, more preferably one or more selected from the group consisting of hydroxy group-containing aromatic dicarboxylic acids, primary amino group-containing aromatic dicarboxylic acids, sulfonic acid group-containing aromatic dicarboxylic acids, and sulfonate group-containing aromatic dicarboxylic acids, and still more preferably one or more selected from the group consisting of sulfonate group-containing aromatic dicarboxylic acids from the viewpoint of removing the resin α contained in the composite material molded body with neutral water and the viewpoint of improving the moisture resistance of the composite material. Among these acids, the aromatic dicarboxylic acid A is, from the same viewpoints, preferably one or more selected from the group consisting of sulfophthalic acids and sulfonaphthalenedicarboxylic acids, more preferably one or more selected from the group consisting of sulfophthalic acids, still more preferably one or more selected from the group consisting of sulfoisophthalic acids and sulfoterephthalic acids, and still more preferably 5-sulfoisophthalic acid.

The percentage of the aromatic dicarboxylic acid monomer unit A based on a total of all monomer units of the resin α is preferably 5 mol% or more, more preferably 7 mol% or more, and still more preferably 10 mol% or more from the viewpoint of removing the resin α contained in the composite material molded body with neutral water, and is preferably 30 mol% or less, more preferably 25 mol% or less, and still more preferably 20 mol% or less from the viewpoint of improving the moisture resistance of the composite material. In the present specification, the percentage of each monomer unit in the resin is measured by the method described in Examples.

The percentage of the aromatic dicarboxylic acid monomer unit A based on a total of all dicarboxylic acid monomer units of the resin α is preferably 10 mol% or more, more preferably 15 mol% or more, and still more preferably 20 mol% or more from the viewpoint of removing the resin α contained in the composite material molded body with neutral water, and is preferably 50 mol% or less, more preferably 40 mol% or less, still more preferably 35 mol% or less, and still more preferably 30 mol% or less from the viewpoint of improving the moisture resistance of the composite material.

[Dicarboxylic acid monomer unit B]

The resin α includes the dicarboxylic acid monomer unit having no hydrophilic group. In the present description, the dicarboxylic acid monomer unit having no hydrophilic group included in the resin α is referred to as a dicarboxylic acid monomer unit B. The dicarboxylic acid from which the dicarboxylic acid monomer unit B is derived is referred to as a dicarboxylic acid B.

The dicarboxylic acid B is more preferably one or more selected from the group consisting of the aromatic dicarboxylic acids having no hydrophilic group and the aliphatic dicarboxylic acids having no hydrophilic group from the viewpoint of improving the moisture resistance of the composite material. Among these acids, the dicarboxylic acid B is, from the same viewpoint, still more preferably one or more selected from the group consisting of benzenedicarboxylic acids, furandicarboxylic acids, naphthalenedicarboxylic acids, cyclohexanedicarboxylic acids, adipic acid, and adamantanedicarboxylic acids, still more preferably one or more selected from the group consisting of terephthalic acid, isophthalic acid, 2,5-furandicarboxylic acid, 2,6-naphthalenedicarboxylic acid, 1,4-cyclohexanedicarboxylic acid, adipic acid, and 1,3-adamantanedicarboxylic acid, and still more preferably one or more selected from the group consisting of terephthalic acid, 2,5-furandicarboxylic acid, adipic acid, and 2,6-naphthalenedicarboxylic acid, and still more preferably 2,6-naphthalenedicarboxylic acid.

The percentage of the dicarboxylic acid monomer unit B based on a total of all monomer units of the resin $\alpha$ is preferably 15 mol% or more, more preferably 25 mol% or more, and still more preferably 30 mol% or more from the viewpoint of improving the moisture resistance of the composite material, and is preferably 45 mol% or less, more preferably 42 mol% or less, and still more preferably 40 mol% or less from the viewpoint of removing the resin $\alpha$ contained in the composite material molded body with neutral water.

The percentage of the dicarboxylic acid monomer unit B based on a total of all dicarboxylic acid monomer units of the resin $\alpha$ is preferably 30 mol% or more, more preferably 50 mol% or more, and still more preferably 70 mol% or more from the viewpoint of improving the moisture resistance of the composite material, and is preferably 90 mol% or less, more preferably 85 mol% or less, and still more preferably 80 mol% or less from the viewpoint of removing the resin $\alpha$ contained in the composite material molded body with neutral water.

The molar ratio of the aromatic dicarboxylic acid monomer unit A to the dicarboxylic acid monomer unit B (the aromatic dicarboxylic acid monomer unit A/the dicarboxylic acid monomer unit B) in the resin $\alpha$ is preferably 10/90 or more, more preferably 15/85 or more, and still more preferably 20/80 or more from the viewpoint of improving the moisture resistance of the composite material, and is preferably 60/40 or less, more preferably 40/60 or less, and still more preferably 30/70 or less from the viewpoint of removing the resin $\alpha$ contained in the composite material molded body with neutral water.

[Monomer unit C]

The resin $\alpha$ preferably includes a monomer unit C derived from a monomer having two functional groups reactive with a carboxy group. In the present description, the monomer having two functional groups reactive with a carboxy group is referred to as a monomer C, and the monomer unit derived from the monomer C is referred to as a monomer unit C.

Examples of the monomer unit C include one or more selected from the group consisting of diol monomer units, diamine monomer units, and alkanolamine monomer units. The monomer unit C is preferably an aliphatic diol monomer unit, an aromatic diol monomer unit, an aliphatic diamine monomer unit, an aliphatic alkanolamine monomer unit, or the like. Among these monomer units, an aliphatic diol monomer unit derived from an aliphatic diol is preferable.

The monomer C having two functional groups reactive with a carboxy group is preferably one or more selected from the group consisting of diols, diamines, and alkanolamines, more preferably one or more selected from the group consisting of aliphatic diols, aromatic diols, aliphatic diamines, and aliphatic alkanoldiamines, and still more preferably an aliphatic diol.

The carbon number of the aliphatic diol from which the aliphatic diol monomer unit is derived is preferably 2 or more from the viewpoint of removing the resin $\alpha$ contained in the composite material molded body with neutral water and the viewpoint of improving the moisture resistance of the composite material, and is preferably 31 or less, more preferably 25 or less, still more preferably 20 or less, and still more preferably 15 or less from the same viewpoints.

Examples of the aliphatic diol include one or more selected from the group consisting of aliphatic chain diols and aliphatic cyclic diols, and aliphatic chain diols are preferable from the viewpoint of removing the resin $\alpha$ contained in the composite material molded body with neutral water and the viewpoint of improving the moisture resistance of the composite material.

The carbon number of the aliphatic chain diols is preferably 2 or more from the viewpoint of removing the resin $\alpha$ contained in the composite material molded body with neutral water and the viewpoint of improving the moisture resistance of the composite material, and is preferably 6 or less, more preferably 4 or less, still more preferably 3 or less, and still more preferably 2 from the same viewpoints.

Though the aliphatic diol may have an ether oxygen, in a case where the aliphatic diol is an aliphatic chain diol, the number of ether oxygen is preferably 1 or less from the viewpoint of removing the resin $\alpha$ contained in the composite material molded body with neutral water and the viewpoint of improving the moisture resistance of the composite material, and in a case where the aliphatic diol is an aliphatic cyclic diol, the number of ether oxygen is preferably 2 or less from the same viewpoints.

The aliphatic chain diol is preferably one or more selected from the group consisting of ethylene glycol, 1,2-propanediol, 1,3-propanediol, diethylene glycol, and dipropylene glycol, more preferably one or more selected from the group consisting of ethylene glycol, 1,2-propanediol, and 1,3-propanediol, and still more preferably ethylene glycol from the viewpoint of removing the resin α contained in the composite material molded body with neutral water and the viewpoint of improving the moisture resistance of the composite material. The aliphatic cyclic diol is preferably one or more selected from the group consisting of cyclohexanedimethanols, and more preferably 1,4-cyclohexanedimethanol from the viewpoint of removing the resin α contained in the composite material molded body with neutral water and the viewpoint of improving the moisture resistance of the composite material.

[Another monomer unit]

The resin α may include a monomer unit, other than the aromatic dicarboxylic acid monomer unit A, the dicarboxylic acid monomer unit B, and the monomer unit C, as long as an effect of the present embodiment is not impaired.
The resin α is a polyester, a polyamide, or a polyesteramide, and is preferably a polyester. Examples of the resin α include a resin including a unit represented by the following General Formula (1) and a unit represented by the following General Formula (2).

[Formula 1]

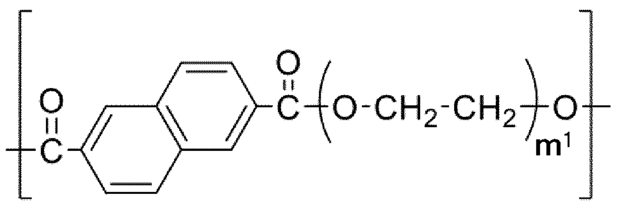

(1)

[Formula 2]

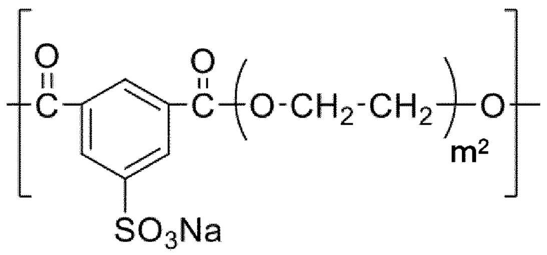

(2)

In the General Formulae (1) and (2), $m^1$ and $m^2$ represent the average number of moles of ethylene glycol monomer units added and are each 1 to 3, preferably 1. The units of the General Formulae (1) and (2) are bonded in a block bond or a random bond, preferably in a random bond.
The weight average molecular weight of the resin α is preferably 5,000 or more, more preferably 10,000 or more, still more preferably 13,000 or more, and still more preferably 15,000 or more from the viewpoint of improving the moisture resistance of the composite material, and is preferably 50,000 or less, more preferably 40,000 or less, still more preferably 30,000 or less, and still more preferably 25,000 or less from the viewpoint of removing the resin α contained in the composite material molded body with neutral water. In the present specification, the weight average molecular weight is measured by the method described in Examples.
The glass transition temperature of the resin α is preferably 50°C or more, more preferably 55°C or more, and still more preferably 60°C or more from the viewpoint of improving the shaping property of the composite material, and is preferably 250°C or less, more preferably 200°C or less, and still more preferably 150°C or less from the same viewpoint. In the present specification, the glass transition temperature is measured by the method described in Examples.
The content of the resin α in the composite material is preferably 1 mass% or more, more preferably 5 mass% or more, still more preferably 10 mass% or more, and still more preferably 15 mass% or more from the viewpoint of removing the resin α contained in the composite material molded body with neutral water, and is preferably 80 mass% or less, more preferably 50 mass% or less, and still more preferably 40 mass% or less from the viewpoint of improving the moisture resistance of the composite material.
The method for producing the resin α is not particularly limited, and a conventionally known method can be

applied.

[Resin β]

The composite material contains the resin β, which is a resin other than the resin α, from the viewpoint of retaining the shape after removing the resin α with neutral water from the composite material molded body obtained by molding the composite material and the viewpoint of improving the shaping property of the composite material.

The resin β can be used without particular limitation as long as it is a resin β used in a composite material for metal molding. The resin β is preferably one or more selected from the group consisting of thermoplastic resins, more preferably one or more selected from the group consisting of crystalline resins, still more preferably one or more selected from the group consisting of polyolefins, and still more preferably one or more selected from the group consisting of polypropylene (PP) and polyethylene (PE) from the viewpoint of improving the shaping property of the composite material.

The content of the resin β in the composite material is preferably 1 mass% or more, more preferably 5 mass% or more, still more preferably 8 mass% or more, and still more preferably 10 mass% or more from the viewpoint of improving the shaping property of the composite material, and is preferably 50 mass% or less, more preferably 40 mass% or less, and still more preferably 30 mass% or less from the same viewpoint.

The content of the resin β relative to 100 parts by mass of the resin α of the composite material is preferably 1 parts by mass or more, more preferably 10 parts by mass or more, and still more preferably 20 parts by mass or more from the viewpoint of improving the shaping property of the composite material, and is preferably 100 parts by mass or more, more preferably 140 parts by mass or more, and still more preferably 150 parts by mass or more from the viewpoint of improving the moisture resistance of the composite material, and is preferably 500 parts by mass or less, more preferably 300 parts by mass or less, still more preferably 200 parts by mass or less, still more preferably 160 parts by mass or less, still more preferably 140 parts by mass or less, still more preferably 100 parts by mass or less, and still more preferably 80 parts by mass or less from the viewpoint of removing the resin α contained in the composite material molded body with neutral water.

[Metal compound particles γ]

The metal compound particles γ are not particularly limited as long as they are particles containing a metal compound γ such as a metal, a metal oxide, or a metal salt as a material of the three-dimensional object. From the viewpoint of improving the shaping property of the composite material, the metal compound γ is preferably one or more selected from the group consisting of metals, metal oxides, and metal salts, and more preferably one or more selected from the group consisting of metals and metal oxides. From the viewpoint of improving the shaping property of the composite material, the metal is preferably one or more selected from the group consisting of Group 3 to Group 14 metals in the periodic table, more preferably one or more selected from the group consisting of Group 6 to Group 13 metals in the periodic table, and still more preferably one or more selected from the group consisting of iron, copper, aluminum, titanium, nickel, chromium, manganese, and silicon. Examples of the metal include simple substances of a single metal, alloys including two or more metals, and alloys mainly including these metals. Examples of the metal oxide include magnesium oxide, calcium oxide, aluminum oxide, titanium oxide, zinc oxide, zirconia, and barium titanate. Examples of the alloy include ferritic stainless steel, martensitic stainless steel, and austenitic stainless steel.

The content of the metal compound γ in the metal compound particles γ is preferably 70 mass% or more, more preferably 80 mass% or more, and still more preferably 85 mass% or more from the viewpoint of improving the shaping property of the composite material, and is preferably 100 mass% or less, more preferably 99 mass% or less, still more preferably 95 mass% or less, and still more preferably 90 mass% or less from the viewpoint of availability.

The average particle size of the metal compound particles γ is preferably 0.1 um or more, and more preferably 1 um or more from the viewpoint of improving the shaping property of the composite material, and is preferably 500 um or less, more preferably 300 um or less, and still more preferably 200 um or less from the same viewpoint.

The content of the metal compound particles γ in the composite material is preferably 10 mass% or more, more preferably 20 mass% or more, still more preferably 30 mass% or more, and still more preferably 40 mass% or more from the viewpoint of the shaping property of the composite material, and is preferably 95 mass% or less, more preferably 90 mass% or less, and still more preferably 80 mass% or less from the same viewpoint.

The content of the metal compound particles γ relative to 100 parts by mass of the resin α of the composite material is preferably 100 parts by mass or more, more preferably 120 parts by mass or more, and still more preferably 130 parts by mass or more from the viewpoint of improving the shaping property of the composite material, and is preferably 500 parts by mass or less, more preferably 400 parts by mass or less, and still more preferably 300 parts by mass or less from the same viewpoint.

The content of the metal compound particles γ relative to 100 parts by mass of the resin β of the composite material is preferably 100 parts by mass or more, more preferably 140 parts by mass or more, and still more preferably

150 parts by mass or more from the viewpoint of improving the shaping property of the composite material, and is preferably 1000 parts by mass or less, more preferably 600 parts by mass or less, and still more preferably 500 parts by mass or less from the same viewpoint.

The content of the metal compound particles γ relative to 100 parts by mass of the total content of the resin α and the resin β of the composite material is preferably 50 parts by mass or more, more preferably 90 parts by mass or more, and still more preferably 100 parts by mass or more from the viewpoint of improving the shaping property of the composite material, and is preferably 500 parts by mass or less, more preferably 300 parts by mass or less, and still more preferably 200 parts by mass or less from the same viewpoint.

[Resin δ]

From the viewpoint of enhancing the affinity and the compatibility between the resin α and the resin β to improve the toughness of the composite material, the composite material may contain a resin δ that has a functional group capable of reacting with the resin α or the resin β and is different from both the resin α and the resin β. From the same viewpoint, the functional group capable of reacting with the resin α or the resin β in the resin δ preferably has a functional group capable of reacting with a hydroxyl group or an amino group, more preferably has an epoxy group, a carbimide group, or an acid anhydride group, and still more preferably has an epoxy group.

Examples of the resin δ having the epoxy group include Bondfast (registered trademark) 7B, Bondfast 2E, Bondfast 2C, Bondfast 7M, and Bondfast CG5001(manufactured by Sumitomo Chemical Co., Ltd.); Rotador (registered trademark) AX8840 (manufactured by Arkema Inc.); JONCRYL (registered trademark) ADR4370S, JONCRYL ADR4368CS, JONCRYL ADR4368F, JONCRYL ADR4300S, and JONCRYL ADR4468 (manufactured by BASF SE); and ARUFON (registered trademark) UG4035, ARUFON UG4040, and ARUFON UG4070 (manufactured by Toagosei Co., Ltd.).

The content of the resin δ in the composite material is preferably 0.1 mass% or more, more preferably 0.5 mass% or more, and still more preferably 1 mass% or more from the viewpoint of improving the toughness of the composite material, and is preferably 5 mass% or less, more preferably 3 mass% or less, and still more preferably 2 mass% or less from the viewpoint of maintaining the solubility of the composite material.

[Organic salt compound ε]

The composite material can contain an organic salt compound represented by the following General Formula (3) from the viewpoint of improving the shaping property of the composite material. In the present description, the organic salt compound represented by the following General Formula (3) is referred to as an organic salt compound ε.

$$(R\text{-}SO_3^-)_n Q^{n+} \qquad (3)$$

(In the General Formula (3), R represents a hydrocarbon group optionally having a substituent and having 1 to 30 carbon atoms, $Q^{n+}$ represents a cation, and n represents a number of 1 or 2.

In the General Formula (3), R represents a hydrocarbon group optionally having a substituent and having 1 to 30 carbon atoms from the viewpoint of removing the resin α contained in the composite material molded body with neutral water and the viewpoint of improving the moisture resistance of the composite material. The hydrocarbon group is any of an aliphatic hydrocarbon group, an alicyclic hydrocarbon group, and an aromatic hydrocarbon group. The hydrocarbon group is preferably an aromatic hydrocarbon group from the viewpoint of removing the resin α contained in the composite material molded body with neutral water and the viewpoint of improving the moisture resistance of the composite material. When the hydrocarbon group is an aromatic hydrocarbon group, the carbon number of the hydrocarbon group is preferably 6 or more, more preferably 8 or more, still more preferably 10 or more, and is preferably 30 or less, and more preferably 25 or less from the viewpoint of removing the resin α contained in the composite material molded body with neutral water and the viewpoint of improving the moisture resistance of the composite material.

As the substituent, a substituent containing at least one selected from the group consisting of a hydrogen atom, a carbon atom, an oxygen atom, a nitrogen atom, a sulfur atom, a phosphorus atom, a silicon atom, and a halogen atom is preferable, among them, a hydrocarbon group is preferable, a hydrocarbon group having 1 to 22 carbon atoms is preferable, a hydrocarbon group having 1 to 16 carbon atoms is more preferable, a hydrocarbon group having 6 to 12 carbon atoms is still more preferable, and a hydrocarbon group having 8 to 12 carbon atoms is still more preferable from the viewpoint of removing the resin α contained in the composite material molded body with neutral water and the viewpoint of improving the moisture resistance of the composite material.

In the General Formula (3), $Q^{n+}$ is preferably a sodium ion, a potassium ion, a lithium ion, a magnesium ion, an ammonium ion, or a phosphonium ion, is more preferably a lithium ion or a phosphonium ion, and is still more preferably a phosphonium ion from the viewpoint of removing the resin α contained in the composite material molded

body with neutral water and the viewpoint of improving the moisture resistance of the composite material. Among phosphonium ions, a tetraalkylphosphonium ion is preferable, and a tetrabutylphosphonium ion is more preferable from the viewpoint of heat resistance.

In the General Formula (3), n is preferably 1 from the viewpoint of removing the resin $\alpha$ contained in the composite material molded body with neutral water and the viewpoint of improving the moisture resistance of the composite material.

The content of the organic salt compound $\varepsilon$ in the composite material is preferably 0.1 mass% or more, more preferably 0.5 mass% or more, and still more preferably 1 mass% or more from the viewpoint of improving the shaping property of the composite material, and is preferably 15 mass% or less, more preferably 5 mass% or less, and still more preferably 2 mass% or less from the viewpoint of improving the moisture resistance of the composite material.

Examples of the form of the composite material include a pellet, powder, and a filament. When the molding method is a fused deposition molding, the form of the composite material is preferably a filament.

The diameter of the filament is not particularly limited. However, the diameter of the filament is generally preferably 0.5 mm or more, more preferably 1.0 mm or more, preferably 3.0 mm or less, and more preferably 2.0 mm or less.

The method for manufacturing the composite material is not particularly limited, and a conventionally known method for manufacturing a soluble material for three-dimensional modeling can be adopted. As an example of the manufacturing method of the soluble material for three-dimensional formation, there is a method of manufacturing by kneading raw materials with a kneader such as a batch type kneader or a twin screw extruder.

The composite material can be used as a raw material for production of a three-dimensional object of the composite material molded body. Furthermore, the composite material can be used for production of a metal-compound three-dimensional object.

<Method for producing three-dimensional object>

The method for producing a three-dimensional object containing a metal compound of the present embodiment includes a molding step of molding the composite material to obtain a composite material molded body and a removing step of removing the resin $\alpha$ from the composite material molded body by bringing the composite material molded body into contact with neutral water. In the present description, the removing step may be referred to as a delipidization step.

In a case where the composite material contains the resin $\delta$ and the organic salt compound $\varepsilon$, the resin $\delta$ and the organic salt compound $\varepsilon$ are also removed from the composite material molded body in the removing step.

From the viewpoint of improving the efficiency of the molding step, the molding step preferably includes one or more steps selected from the group consisting of a layering step, a press molding step, and an injection molding step, and more preferably includes a layering step.

Examples of an additive manufacturing method including the layering step include fused deposition molding (FDM), binder jetting, and selective laser sintering (SLS). Among them, fused deposition molding is preferable from the viewpoint of easy availability of the shaping apparatus.

In the layering step, the composite material is used as a shaping agent that is a raw material of a three-dimensional object containing a metal compound, and a water-dispersible resin such as the resin $\alpha$ is used as a support material to be removed in the removing step, and thus the composite material molded body as a precursor of a three-dimensional object containing a metal compound can be obtained.

In the removing step, the water-dispersible resin is removed by bringing the composite material molded body into contact with neutral water. The method of bringing the composite material molded body into contact with neutral water is preferably a method of immersing the composite material molded body in neutral water, from the viewpoint of cost and the viewpoint of ease of work. From the viewpoint of improving the removability of the water-dispersible resin, the composite material molded body can be irradiated with ultrasonic waves while immersed to accelerate dissolution of the water-dispersible resin.

Examples of the neutral water include an aqueous solution having a pH of 6 to 8. Specific examples of the neutral water include deionized water, pure water, tap water, and industrial water, and deionized water or tap water is preferable from the viewpoint of availability. The neutral water can contain a water-soluble organic solvent as long as the processing member, manufacturing equipment, and the like are not damaged. Examples of the water-soluble organic solvent include lower alcohols such as methanol, ethanol, and 2-propanol, glycol ethers such as propylene glycol monomethyl ether, ethylene glycol monoethyl ether, ethylene glycol mono-tertiary butyl ether, and diethylene glycol monobutyl ether, and ketones such as acetone and methyl ethyl ketone. When the neutral water contains the water-soluble organic solvent, from the viewpoint of reducing damage to three-dimensional objects, the content of the water-soluble organic solvent in the neutral water is preferably 0.1 mass% or more, more preferably 0.5 mass% or more, still more preferably 1 mass% or more, and still more preferably 3 mass% or more, and is preferably 50 mass% or less, more preferably 40 mass% or less, still more preferably 30 mass% or less, and still more preferably 20 mass% or less.

Furthermore, the obtained three-dimensional object containing a metal compound is sintered to fuse the metal compound particles $\gamma$ to each other in the three-dimensional object containing a metal compound and thermally decompose the resin, and thus a metal-compound three-dimensional object including little residual organic matter can be produced.

The residual organic content in the metal-compound three-dimensional object is preferably 10 mass% or less, more preferably 5 mass% or less, and still more preferably 1 mass% or less from the viewpoint of application of the metal-compound three-dimensional object as a component.

With respect to the above-mentioned embodiments, the present specification further discloses the following composition, method for production, and uses.

<1> A composite material comprising:

a resin $\alpha$ including an aromatic dicarboxylic acid monomer unit A having a hydrophilic group and a dicarboxylic acid monomer unit B having no hydrophilic group;
a resin $\beta$ that is a resin other than the resin $\alpha$; and
metal compound particles $\gamma$,
wherein a content of the metal compound particles $\gamma$ is 50 parts by mass or more and 500 parts by mass or less with respect to 100 parts by mass of a total content of the resin $\alpha$ and the resin $\beta$.

<2> The composite material according to <1>, further comprising a resin $\delta$ that has a functional group capable of reacting with the resin $\alpha$ or the resin $\beta$ and is different from both the resin $\alpha$ and the resin $\beta$.
<3> The composite material according to <1> or <2>, wherein the content of the resin $\beta$ relative to 100 parts by mass of the resin $\alpha$ of the composite material is preferably 1 parts by mass or more, more preferably 10 parts by mass or more, still more preferably 20 parts by mass or more, still more preferably 100 parts by mass or more, still more preferably 140 parts by mass or more, and still more preferably 150 parts by mass or more.
<4> The composite material according to any one of <1> to <3>, wherein the content of the resin $\beta$ relative to 100 parts by mass of the resin $\alpha$ of the composite material is preferably 500 parts by mass or less, more preferably 300 parts by mass or less, still more preferably 200 parts by mass or less, still more preferably 160 parts by mass or less, still more preferably 140 parts by mass or less, still more preferably 100 parts by mass or less, and still more preferably 80 parts by mass or less.
<5> The composite material according to any one of <1> to <4>, wherein the content of the resin $\alpha$ in the composite material is preferably 1 mass% or more, more preferably 5 mass% or more, still more preferably 10 mass% or more, and still more preferably 15 mass% or more.
<6> The composite material according to any one of <1> to <5>, wherein the content of the resin $\alpha$ in the composite material is preferably preferably 80 mass% or less, more preferably 50 mass% or less, and still more preferably 40 mass% or less.
<7> The composite material according to any one of <1> to <6>, wherein the content of the resin $\beta$ in the composite material is preferably 1 mass% or more, more preferably 5 mass% or more, still more preferably 8 mass% or more, and still more preferably 10 mass% or more.
<8> The composite material according to any one of <1> to <7>, wherein the content of the resin $\beta$ in the composite material is preferably 50 mass% or less, more preferably 40 mass% or less, and still more preferably 30 mass% or less.
<9> The composite material according to any one of <1> to <8>, wherein the content of the metal compound particles $\gamma$ in the composite material is preferably 10 mass% or more, more preferably 20 mass% or more, still more preferably 30 mass% or more, and still more preferably 40 mass% or more.
<10> The composite material according to any one of <1> to <9>, wherein the content of the metal compound particles $\gamma$ in the composite material is preferably 95 mass% or less, more preferably 90 mass% or less, and still more preferably 80 mass% or less.
<11> The composite material according to any one of <1> to <10>, wherein the metal compound particles $\gamma$ contain a metal compound $\gamma$.
<12> The composite material according to <11>, wherein the metal compound $\gamma$ is preferably one or more selected from the group consisting of metals, metal oxides, and metal salts, and more preferably one or more selected from the group consisting of metals and metal oxides.
<13> The composite material according to <12>, wherein the metal is preferably one or more selected from the group consisting of Group 3 to Group 14 metals in the periodic table, more preferably one or more selected from the group consisting of Group 6 to Group 13 metals in the periodic table, and still more preferably one or more selected from the group consisting of iron, copper, aluminum, titanium, nickel, chromium, manganese, and silicon.
<14> The composite material according to <12> or <13>, wherein the metal is preferably simple substances of a single metal, alloys including two or more metals, or alloys mainly including these metals.

<15> The composite material according to any one of <12> to <14>, wherein the metal oxide is magnesium oxide, calcium oxide, aluminum oxide, titanium oxide, zinc oxide, zirconia, or barium titanate.
<16> The composite material according to any one of <11> to <15>, wherein the content of the metal compound $\gamma$ in the metal compound particles $\gamma$ is preferably 70 mass% or more, more preferably 80 mass% or more, and still more preferably 85 mass% or more.
<17> The composite material according to any one of <11> to <16>, wherein the content of the metal compound $\gamma$ in the metal compound particles $\gamma$ is preferably 100 mass% or less, more preferably 99 mass% or less, still more preferably 95 mass% or less, and still more preferably 90 mass% or less.
<18> The composite material according to any one of <1> to <17>, wherein an aromatic dicarboxylic acid A from which the aromatic dicarboxylic acid monomer unit A is derived is preferably one or more selected from the group consisting of aromatic dicarboxylic acids having a hydrophilic group, more preferably one or more selected from the group consisting of hydroxy group-containing aromatic dicarboxylic acids, primary amino group-containing aromatic dicarboxylic acids, sulfonic acid group-containing aromatic dicarboxylic acids, and sulfonate group-containing aromatic dicarboxylic acids, still more preferably one or more selected from the group consisting of sulfonate group-containing aromatic dicarboxylic acids, still more preferably one or more selected from the group consisting of sulfophthalic acids and sulfonaphthalenedicarboxylic acids, still more preferably one or more selected from the group consisting of sulfophthalic acids, still more preferably one or more selected from the group consisting of sulfoisophthalic acids and sulfoterephthalic acids, and still more preferably 5-sulfoisophthalic acid.
<19> The composite material according to any one of <1> to <18>, wherein a dicarboxylic acid B from which the dicarboxylic acid monomer unit B is derived is preferably one or more selected from the group consisting of the aromatic dicarboxylic acids having no hydrophilic group and the aliphatic dicarboxylic acids having no hydrophilic group, more preferably one or more selected from the group consisting of benzenedicarboxylic acids, furandicarboxylic acids, naphthalenedicarboxylic acids, cyclohexanedicarboxylic acids, adipic acid, and adamantanedicarboxylic acids, still more preferably one or more selected from the group consisting of terephthalic acid, isophthalic acid, 2,5-furandicarboxylic acid, 2,6-naphthalenedicarboxylic acid, 1,4-cyclohexanedicarboxylic acid, adipic acid, and 1,3-adamantanedicarboxylic acid, still more preferably one or more selected from the group consisting of terephthalic acid, 2,5-furandicarboxylic acid, adipic acid, and 2,6-naphthalenedicarboxylic acid, and still more preferably 2,6-naphthalenedicarboxylic acid.
<20> The composite material according to any one of <1> to <19>, wherein the molar ratio of the aromatic dicarboxylic acid monomer unit A to the dicarboxylic acid monomer unit B (the aromatic dicarboxylic acid monomer unit A/the dicarboxylic acid monomer unit B) in the resin $\alpha$ is preferably 10/90 or more, more preferably 15/85 or more, and still more preferably 20/80 or more.
<21> The composite material according to any one of <1> to <20>, wherein the molar ratio of the aromatic dicarboxylic acid monomer unit A to the dicarboxylic acid monomer unit B (the aromatic dicarboxylic acid monomer unit A/the dicarboxylic acid monomer unit B) in the resin $\alpha$ is preferably 60/40 or less, more preferably 40/60 or less, and still more preferably 30/70 or less.
<22> The composite material according to any one of <1> to <21>, wherein the resin $\alpha$ includes a monomer unit C derived from a monomer C having two functional groups reactive with a carboxy group.
<23> The composite material according to <22>, wherein the monomer unit C is preferably one or more selected from the group consisting of diol monomer units, diamine monomer units, and alkanolamine monomer units, more preferably one or more selected from the group consisting of an aliphatic diol monomer unit, an aromatic diol monomer unit, an aliphatic diamine monomer unit, and an aliphatic diamine monomer unit, and still more preferably an aliphatic diol unit.
<24> The composite material according to <22> or <23>, wherein the monomer C having two functional groups reactive with a carboxy group is preferably one or more selected from the group consisting of diols, diamines, and alkanolamines, more preferably one or more selected from the group consisting of aliphatic diols, aromatic diols, aliphatic diamines, and aliphatic alkanoldiamines, still more preferably an aliphatic diol, and still more preferably one or more selected from the group consisting of aliphatic chain diols and aliphatic cyclic diols.
<25> The composite material according to <24>, wherein the carbon number of the aliphatic diol is preferably 2 or more.
<26> The composite material according to <24> or <25>, wherein the carbon number of the aliphatic diol is preferably 31 or less, more preferably 25 or less, still more preferably 20 or less, and still more preferably 15 or less.
<27> The composite material according to any one of <24> to <26>, wherein the carbon number of the aliphatic chain diols is preferably 2 or more.
<28> The composite material according to any one of <24> to <27>, wherein the carbon number of the aliphatic chain diols is preferably 6 or less, more preferably 4 or less, still more preferably 3 or less.
<29> The composite material according to any one of <24> to <28>, wherein the aliphatic chain diol is preferably one or more selected from the group consisting of ethylene glycol, 1,2-propanediol, 1,3-propanediol, diethylene

glycol, and dipropylene glycol, more preferably one or more selected from the group consisting of ethylene glycol, 1,2-propanediol, and 1,3-propanediol, and still more preferably ethylene glycol.

<30> The composite material according to any one of <24> to <29>, wherein the aliphatic cyclic diol is preferably one or more selected from the group consisting of cyclohexanedimethanols, and more preferably 1,4-cyclohexanedimethanol.

<31> The composite material according to any one of <1> to <28>, comprising an organic salt compound ε represented by General Formula (3) described below:

$$(R\text{-}SO_3^-)nQ^{n+} \qquad (3)$$

wherein R represents a hydrocarbon group that may have a substituent and has 1 to 30 carbon atoms, $Q^{n+}$ represents a cation, and n represents a number of 1 or 2.

<32> A composite material comprising:

a resin α including an aromatic dicarboxylic acid monomer unit A having a hydrophilic group and a dicarboxylic acid monomer unit B having no hydrophilic group;
a resin β that is a resin other than the resin α; and
metal compound particles γ,
wherein a content of the metal compound particles γ is 50 parts by mass or more and 500 parts by mass or less with respect to 100 parts by mass of a total content of the resin α and the resin β,
wherein a content of the resin β is 20 part by mass or more and 160 parts by mass or less with respect to 100 parts by mass of the resin α in the composite material.

<33> A composite material comprising:

a resin α including an aromatic dicarboxylic acid monomer unit A having a hydrophilic group and a dicarboxylic acid monomer unit B having no hydrophilic group;
a resin β that is a resin other than the resin α; and
metal compound particles γ,
wherein a content of the metal compound particles γ is 50 parts by mass or more and 500 parts by mass or less with respect to 100 parts by mass of a total content of the resin α and the resin β,
wherein a content of the resin β is 20 part by mass or more and 80 parts by mass or less with respect to 100 parts by mass of the resin α in the composite material.

<34> A composite material comprising:

a resin α including an aromatic dicarboxylic acid monomer unit A having a hydrophilic group, a dicarboxylic acid monomer unit B having no hydrophilic group, and a monomer unit C derived from a monomer having two functional groups reactive with a carboxy group;
a resin β that is a resin other than the resin α; and
metal compound particles γ,
wherein a content of the metal compound particles γ is 50 parts by mass or more and 500 parts by mass or less with respect to 100 parts by mass of a total content of the resin α and the resin β,
wherein a content of the resin β is 20 part by mass or more and 160 parts by mass or less with respect to 100 parts by mass of the resin α in the composite material.

<35> A method for producing a three-dimensional object containing a metal compound, the method comprising:

a molding step of molding the composite material according to any one of <1> to <34> to obtain a composite material molded body; and
a removing step of removing the resin α from the composite material molded body by bringing the composite material molded body into contact with neutral water.

<36> The method according to <35>, wherein the molding step includes a layering step of layering the composite material according to any one of <1> to <34> to obtain a composite material molded body.

<37> The method according to <36>, wherein the layering step is a fused deposition molding step of layering the composite material by fused deposition molding to obtain a composite material molded body.

<38> A method for producing a metal-compound three-dimensional object, the method comprising sintering a three-dimensional object containing a metal compound obtained by the method for producing a three-dimensional object containing a metal compound according to any one of <35> to <37>.

<39> The method for producing a metal-compound three-dimensional object according to <38>, wherein a residual organic content in the metal-compound three-dimensional object is preferably 10 mass% or less, more preferably 5 mass% or less, and still more preferably 1 mass% or less.

<40> Use of the composite material according to any one of <1> to <34> as a raw material for production of the composite material molded body.

<41> Use of the composite material according to any one of <1> to <34> for production of a metal-compound three-dimensional object.

## EXAMPLES

The pressure is expressed in an absolute pressure. "Normal pressure" refers to 101.3 kPa.

<Method for preparing resin composition>

[Preparation of resin composition 1]

Into a 2 L stainless steel separable flask (with a K tube, a stirrer, and a nitrogen inlet tube), 97.7 g of dimethyl 2,6-naphthalenedicarboxylate (manufactured by Tokyo Chemical Industry Co., Ltd., first grade), 40.6 g of dimethyl sodium 5-sulfoisophthalate (manufactured by FUJIFILM Wako Pure Chemical Corporation), 76.7 g of ethylene glycol (manufactured by FUJIFILM Wako Pure Chemical Corporation, Wako Special Grade), 82 mg of titanium tetrabutoxide (manufactured by Tokyo Chemical Industry Co., Ltd., first grade), and 506 mg of sodium acetate (manufactured by FUJIFILM Wako Pure Chemical Corporation, Wako Special Grade) were put, the mixture was heated with a mantle heater while stirred at normal pressure in a nitrogen atmosphere so that the heater surface temperature was raised from 140°C to 260°C over 1 hour, and the mixture was stirred for 6 hours and 30 minutes at the temperature to perform an ester exchange reaction. Then, 6.89 g of tetrabutylphosphonium dodecylbenzenesulfonate (manufactured by TAKEMOTO OIL & FAT Co., Ltd., ELECUT S-418) was added, and the resulting mixture was stirred for 15 minutes. Then, the heater surface temperature was raised from 260 to 290°C over 30 minutes, the pressure was simultaneously reduced from normal pressure to 2 kPa, and the mixture was reacted for 1 hour and a half under these conditions. Thereafter, the mixture was reacted while stirred at 800 Pa for 30 minutes, and then the heater surface temperature was raised from 290°C to 295°C. The mixture was reacted while stirred at 400 Pa for 2 hours, and then reacted while stirred at a degree of pressure reduction gradually increased up to 100 Pa to obtain a resin composition 1 containing a resin $\alpha 1$. Table 1 shows the contents of the resin $\alpha 1$ and the organic salt compound $\varepsilon$ contained in the resin composition 1 that were calculated from the amounts of the raw materials added, and the glass transition temperature of the resin composition 1. In this preparation, it was assumed that excessive ethylene glycol was distilled away from the reaction system and the diol unit and the dicarboxylic acid units were reacted in an equal amount. Table 2 shows the proportion of each of the monomer unit A and the monomer unit B to the total of all the dicarboxylic acid monomer units in the resin $\alpha$ contained in the resin composition 1, and shows the weight average molecular weight and the content of the hydrophilic group of the resin $\alpha$.

[Preparation of resin composition 2]

In an apparatus similar to that in the case of preparing the resin composition 1, raw materials similar to those in the case of preparing the resin composition 1 were put at a mass ratio similar to that in the case of the resin composition 1. Subsequently, the resulting mixture was heated with a mantle heater while stirred at normal pressure in a nitrogen atmosphere so that the heater surface temperature was raised from 140°C to 260°C over 1 hour, and the mixture was stirred for 6 hours and 30 minutes at the temperature to perform an ester exchange reaction. Then, the heater surface temperature was raised from 260 to 290°C over 30 minutes, the pressure was simultaneously reduced from normal pressure to 3 kPa, and the mixture was reacted for 1 hour and a half under these conditions. Then, the mixture was reacted while stirred at the temperature at 2000 Pa for 45 minutes. Subsequently, the heater surface temperature was raised from 290°C to 295°C, and then the mixture was reacted while stirred for 2 hours at a degree of pressure reduction increased up to 500 Pa to obtain a resin composition 2 containing a resin $\alpha 2$. In this preparation, it was assumed that excessive ethylene glycol was distilled away from the reaction system and the diol unit and the dicarboxylic acid units were reacted in an equal amount. Table 1 shows the glass transition temperature of the resin composition 2. Table 2 shows the proportion of each of the monomer unit A and the monomer unit B to the total of all the dicarboxylic acid monomer units in the resin $\alpha 2$ contained in the resin composition 2, and shows the weight average molecular weight and the content of the hydrophilic group of the resin $\alpha 2$.

[Preparation of resin composition 3]

Into an apparatus similar to that in the case of preparing the resin composition 1, 90.0 g of dimethyl 2,6-naphthalenedicarboxylate (manufactured by Tokyo Chemical Industry Co., Ltd., first grade), 64.2 g of dimethyl adipate (manufactured by Tokyo Chemical Industry Co., Ltd.), 65.5 g of dimethyl sodium 5-sulfoisophthalate (manufactured by Sanyo Chemical Industries, Ltd.), 104.2 g of 1,4-cyclohexanedimethanol (manufactured by FUJIFILM Wako Pure Chemical Corporation), 74.0 g of 1,3-propanediol (manufactured by Tokyo Chemical Industry Co., Ltd.), 252 mg of titanium tetrabutoxide (manufactured by Tokyo Chemical Industry Co., Ltd.), and 676 mg of sodium acetate (manufactured by FUJIFILM Wako Pure Chemical Corporation) were put, and the mixture was heated while stirred at a nitrogen flow rate of 0.5 L/min until the heater surface temperature reached 160°C. Thereafter, the temperature was raised to 220°C over 25 minutes, and an ester exchange reaction was performed over 6 hours and 30 minutes. Thereafter, the absolute pressure was reduced to 1.3 kPa while the temperature was raised to 240°C over 20 minutes, and then the mixture was reacted for 15 hours while the resulting distillate was taken out to obtain a resin composition 3 containing a resin α3. In this preparation, it was assumed that excessive 1,3-propanediol was distilled away from the reaction system and the diol unit and the dicarboxylic acid units were reacted in an equal amount. Table 1 shows the glass transition temperature of the resin composition 3. Table 2 shows the proportion of each of the monomer unit A and the monomer unit B to the total of all the dicarboxylic acid monomer units in the resin α3 contained in the resin composition 3, and shows the weight average molecular weight and the content of the hydrophilic group of the resin α3.

[Table 1]

| | Content (mass%) | | | | Glass transition temperature (°C) |
|---|---|---|---|---|---|
| | Resin α1 | Resin α2 | Resin α3 | Organic salt compound ε | |
| Resin composition 1 | 95.2 | - | - | 4.8 | 108 |
| Resin composition 2 | - | 100 | - | - | 107 |
| Resin composition 3 | - | - | 100 | - | 61 |

[Table 2]

| | Proportion of each monomer unit to total of all dicarboxylic acid monomer units [mol%] | | Content of hydrophilic group [mmol/g] | Weight average molecular weight |
|---|---|---|---|---|
| | A | B | | |
| Resin α1 | 25 | 75 | 1.0 | 19500 |
| Resin α2 | 25 | 75 | 1.0 | 17300 |
| Resin α3 | 24 | 76 | 0.79 | 24300 |

<Method for preparing composite material>

[Composite materials 1 to 12]

The raw materials shown in Table 3 were melt-kneaded using a melt kneader (manufactured by Toyo Seiki Seisaku-sho, Ltd.: Labo Plastmill 4C150) at 230°C and 90 r/min for 10 minutes to obtain composite materials 1 to 12. At the time of filling raw materials, raw materials other than the metal compound particles γ were filled, and then the metal compound particles γ were filled.

[Preparation of composite material 13]

The raw materials shown in Table 3 were melt-kneaded using a melt kneader (manufactured by Toyo Seiki Seisaku-sho, Ltd.: Labo Plastmill 4C150) at 200°C and 90 r/min for 10 minutes to obtain a composite material 13. At the time of filling raw materials, raw materials other than the metal compound particles γ were filled, and then the metal

compound particles γ were filled.

The resin β, the metal particles or metal salt γ, the resin δ, and the resins used in Comparative Example in Table 3 are as follows.

Linear low density polyethylene (LLDPE): Evolue SP0510 manufactured by Prime Polymer Co., Ltd.

Polypropylene: J105G manufactured by Prime Polymer Co., Ltd.

Iron powder: Iron, Powder (85% purity, particle size (content of particles that pass through 150 um) 95% or more) manufactured by FUJIFILM Wako Pure Chemical Corporation

Copper powder: Copper, Powder manufactured by FUJIFILM Wako Pure Chemical Corporation, Wako 1st Grade

Aluminum oxide powder: Aluminum Oxide manufactured by FUJIFILM Wako Pure Chemical Corporation, Wako Special Grade (particle size (content of particles that pass through 75 um) 80% or more)

Ethylene-vinyl acetate-glycidyl methacrylate copolymer: Bondfast 7B manufactured by SUMITOMO CHEMICAL COMPANY, LIMITED

PEG having methoxy group at one terminal: manufactured by Evermore Chemical Industry Co., Ltd.: MPEG 2000

<Analysis method>

[Proportion of amount of substance of monomer unit derived from dimethyl sodium 5-sulfoisophthalate (hereinafter, referred to as monomer unit A) to total amount of substance of all dicarboxylic acid monomer units in resin]

[Resins α1 and α2]

In a solvent prepared so as to contain deuterated chloroform and deuterated trifluoroacetic acid at a mass ratio of 3 : 2, 10 mg of a sample was dissolved, and proton NMR measurement was performed using NMR MR400 manufactured by Agilent Technologies, Inc. to calculate an amount of substance A obtained by dividing an integral value A of a peak derived from a benzene ring in a monomer unit derived from dimethyl sodium 5-sulfoisophthalate (monomer unit A) by the number of protons corresponding to the benzene ring in the monomer unit A and an amount of substance B obtained by dividing an integral value B of a peak derived from a naphthalene ring in a monomer unit derived from dimethyl 2,6-naphthalenedicarboxylate (hereinafter, referred to as a monomer unit B) by the number of protons corresponding to the naphthalene ring in the monomer unit B. The amount of substance A was divided by the sum of the amount of substance A and the amount of substance B to obtain a value expressed in percentage (100 × amount of substance A/(amount of substance A + amount of substance B)), and this value was regarded as the proportion of the amount of substance of the monomer unit A to the total amount of substance of all the dicarboxylic acid monomer units in the polyester resin. The amount of substance B was divided by the sum of the amount of substance A and the amount of substance B to obtain a value expressed in percentage (100 × amount of substance B/(amount of substance A + amount of substance B)), and this value was regarded as the proportion of the amount of substance of the monomer unit B to the total amount of substance of all the dicarboxylic acid monomer units in the polyester resin.

[Resin α3]

Proton NMR measurement was performed in the same manner as in the case of the resins α1 and α2. The amount of substance A, an amount of substance B1 obtained by dividing an integral value B1 of a peak derived from a proton directly bonded to an aromatic ring in a monomer unit derived from dimethyl naphthalenedicarboxylate (monomer unit B1) by the number of protons directly bonded to an aromatic ring present in the monomer unit B1, and an amount of substance B2 obtained by dividing an integral value B2 of a peak derived from hydrogen directly bonded to an alpha position of an ester in a monomer unit derived from adipic acid (monomer unit B2) by the number of hydrogen directly bonded to an alpha position present in the monomer unit B2 were calculated. The amount of substance A was divided by the sum of the amount of substance A, the amount of substance B1, and the amount of substance B2 to obtain a value expressed in percentage (100 × amount of substance A/(amount of substance A + amount of substance B1 + amount of substance B2)), and this value was regarded as the proportion of the amount of substance of the monomer unit A to the total amount of substance of all the carboxylic acid monomer units in the polyester resin. The sum of the amount of substance B1 and the amount of substance B2 was divided by the sum of the amount of substance A, the amount of substance B1, and the amount of substance B2 to obtain a value expressed in percentage (100 × (amount of substance B1 + amount of substance B2)/(amount of substance A + amount of substance B1 + amount of substance B2)), and this value was regarded as the proportion of the amount of substance of the monomer unit B to the total amount of substance of all the carboxylic acid monomer units in the polyester resin.

[Weight average molecular weight (Mw)]

A calibration curve was prepared from standard polystyrene using a gel permeation chromatograph (GPC) method under the following conditions to determine the weight average molecular weight (Mw).

·Apparatus: HLC-8320 GPC (Detector integrated type, manufactured by TOSOH CORPORATION)
·Column: α-M × 2 columns (7.8 mmI.D. × 30 cm, manufactured by TOSOH CORPORATION)
·Eluent: 60 mmol/L phosphoric acid + 50 mmol/L brominated lithium dimethylformamide solution
·Flow rate: 1.0 mL/min
·Column temperature: 40°C
·Detector: RI detector
·Standard substance: polystyrene

[Glass transition temperature]

A sample was crushed using a mortar, precisely weighed, and 5 to 10 mg of the sample was sealed in an aluminum pan and heated from 30°C to 250°C at 10°C/min and then cooled to 30°C at a cooling rate set to 150°C/min using a DSC apparatus (DSC 7020 manufactured by Seiko Instruments Inc.). The sample was heated again at 10°C/min to 250°C to obtain a DSC curve, from which the glass transition temperature (°C) was determined. In the heating, a baseline at which the calorific value is constant appears, and then an inflection point appears due to glass transition. The temperature at an intersection of a straight line obtained by extending the baseline to the high temperature side and a tangent at the inflection point was regarded as the glass transition temperature.

<Evaluation method>

[Hygroscopic property]

About 1 g of a resin composition powder ground with a coffee mill (Mini Blender manufactured by OSAKA CHEMICAL Co., Ltd.) was vacuum-dried at 70°C for 24 hours, then precisely weighed on a petri dish, and allowed to stand in a humidistat bath at 25°C and 98 RH%. After 24 hours, mass measurement was performed, and the moisture absorption rate was calculated with the following formula. Table 3 shows the results.

Moisture absorption rate (%) = (amount of resin composition substance after standing - amount of resin composition substance before standing)/amount of resin composition substance before standing × 100

[Toughness of filament]

Each of the composite materials 1 and 6 to 8 was melted using Capilograph (1D manufactured by Toyo Seiki Seisaku-sho, Ltd.) at a barrel temperature of 180 to 190°C, extruded from a 2 mm diameter and 10 mm long capillary at an extrusion rate of 10 mm/min, and processed into an about 1.7 mm diameter filament while lightly and manually pulled with the tip thereof held with tweezers. For simple evaluation of the toughness of the filament, the prepared filament was bent by hand and thus evaluated. The evaluation criteria are as follows. Table 3 shows the results.

A: Bendable by 180°
B: Bendable by 90°
C: Unbendable by 90°

[Water-solubility test for filament]

Each of the filaments of the composite materials 1 and 8 was cut out by about 10 cm, and the cut filament was vacuum-dried at 70°C for 24 hours and then weighed. The filament was put into 500 g of deionized water at 80°C in a 500 mL beaker, and stirred for 60 minutes at 300 rpm using a magnetic stirrer. After the test, the appearance of the

filament was visually observed to determine whether the shape was changed. The filament was vacuum-dried at 70°C for 24 hours, and then the dissolution rate was calculated with the following formula. Table 3 shows the results.

$$\text{Dissolution rate (\%)} = \text{(mass of filament before dissolution - mass of filament remaining undissolved)/mass of filament before dissolution} \times 100$$

[Shape retaining property after sintering]

[Molding step]

Each sample of the composite materials 1 to 12 was pressed using a pressing machine (Labo Press P2-30T manufactured by Toyo Seiki Seisaku-sho, Ltd.) at 230°C and 0.5 MPa for 2 minutes and subsequently at 230°C and 20 MPa for 2 minutes. The sample was then rapidly cooled to prepare a 0.4 mm thick sheet. In the composite material 13, the components were separated at the stage of melt-kneading the sample, so that sheet molding by pressing was difficult.

[Step of bringing into contact with neutral water]

The sheet obtained in the molding step was immersed in water at 80°C for 60 minutes, and vacuum-dried at 60°C for 24 hours.

[Sintering]

(Composite materials 1 to 3, 5 to 7, 11, and 12)

The sheet obtained in the step of bringing into contact with neutral water was cut into a size of 2 cm × 2 cm, put into a crucible with a lid, and heated in a small box furnace (KBF894N2 manufactured by Koyo Thermo Systems Co., Ltd.) at 7°C/min to 1000°C, and then heated for 1 hour.

After cooling, the state of the sample in the crucible was observed. The evaluation criteria are as follows. Table 3 shows the results.

A: Sinterable and retaining sheet shape
B: Sinterable and partially retaining sheet shape
C: Not sinterable and retaining no sheet shape

(Composite materials 4 and 8 to 10)

The sheet obtained in the step of bringing into contact with neutral water was cut into a size of 2 cm × 2 cm, put into a crucible with a lid, and heated in a small box furnace (KBF894N2 manufactured by Koyo Thermo Systems Co., Ltd.) at 7°C/min to 1000°C, and then heated for 1 hour. After cooling, the crucible was transferred to a sintering furnace (SUPER BURN SE-3045F manufactured by MOTOYAMA CO., LTD.), heated at 7°C/min to 1500°C, and then heated for 30 minutes. After cooling, the state of the sample in the crucible was observed. The evaluation criteria are as follows. Table 3 shows the results.

A: Sinterable and retaining sheet shape
B: Sinterable and partially retaining sheet shape
C: Not sinterable and retaining no sheet shape

[Residual organic content after ignition]

(Examples 1 to 12 and Reference Example)

From the sheet obtained in the step of bringing into contact with neutral water, 5 mg of a sample was collected and heated using a simultaneous thermogravimetric analyzer (STA7200RV manufactured by Hitachi High-Tech Corporation) from 40°C to 500°C at 10°C/min, and the amount (%) of the sample after mass loss was measured. In the sample

after delipidization, only the mass of the resin β is lost at the time of ignition, theoretically. The theoretical ignition loss (%) was calculated with the following formula.

Theoretical ignition loss (%) = weight ratio of resin β/(100 - weight ratio of resin α - weight ratio of resin δ - weight ratio of organic salt compound ε)

Using the amount (%) of the sample after mass loss and the theoretical ignition loss (%), the residual organic content (%) after ignition was calculated with the following formula. Table 3 shows the results.

$$\text{Residual organic content (\%) after Ignition} = 100 - (\text{amount of sample after mass loss}/\text{theoretical ignition loss}) \times 100$$

(Reference Example)

For the composite material 1, 5 mg of a sample was collected from the sheet obtained in the molding step and heated using a simultaneous thermogravimetric analyzer (STA7200RV manufactured by Hitachi High-Tech Corporation) from 40°C to 500°C at 10°C/min, and the amount (%) of the sample after mass loss was measured. In the sample after delipidization, the mass of the resin α, the resin β, the resin δ, and the organic salt compound ε is lost at the time of ignition, theoretically. The theoretical ignition loss (%) was calculated with the following formula.

Theoretical ignition loss (%) = weight ratio of resin α + weight ratio of resin β + weight ratio of resin δ + weight ratio of organic salt compound ε

Using the amount (%) of the sample after mass loss and the theoretical ignition loss (%), the residual organic content (%) after ignition was calculated with the following formula. Table 3 shows the results.

$$\text{Residual organic content (\%) after Ignition} = 100 - (\text{amount of sample after mass loss}/\text{theoretical ignition loss}) \times 100$$

[Table 3]

| | | Example 1 | Example 2 | Example 3 | Example 4 | Example 5 | Example 6 | Example 7 | Example 8 | Example 9 | Example 10 | Example 11 | Example 12 | Comparative Example 1 | Reference Example |
|---|---|---|---|---|---|---|---|---|---|---|---|---|---|---|---|
| Composite material | | Composite material 1 | Composite material 2 | Composite material 3 | Composite material 4 | Composite material 5 | Composite material 6 | Composite material 7 | Composite material 8 | Composite material 9 | Composite material 10 | Composite material 11 | Composite material 12 | Composite material 13 | Composite material 1 |
| Resin α1 (mass8) | | 28.6 | 38.1 | 19.0 | 22.8 | 28.6 | 28.6 | 28.6 | 27.1 | 16.4 | 10.9 | - | - | | 28.6 |
| Resin α2 (mass8) | | - | - | - | - | - | - | - | - | - | - | 30.0 | - | | - |
| Resin α3 (mass%) | | | | | | | | | - - | | | | 30.0 | | - |
| PEG having methoxy group at one terminal (mass%) | | - - | - - | - - | - - | - - | | - - | - - | - - | - - | - | - | 30.0 | - |
| Resin β | LLDPE (mass%) | 20.0 | 10.0 | 30.0 | 16.0 | - | 20.0 | 20.0 | 20.0 | 12.0 | 8.0 | 20.0 | 20.0 | 20.0 | 20.0 |
| | Polypropylene (mass8) | - | - | - | - | 20.0 | - | - | - | - | - | - | - | - | - |
| Metal compound particles γ | Iron powder (mass%) | 50.0 | 50.0 | 50.0 | 60.0 | 50.0 | - | - | 50.0 | 70.0 | 80.0 | 50.0 | 50.0 | 50.0 | 50.0 |
| | Copper powder (mass%) | - | - | - | - | - | 50.0 | - | - | - | - | - | - | - | - |
| | Aluminum oxide powder (mass8) | - | - | - | - | - | - | 50.0 | - | - | - | - | - | - | - |
| Resin δ | Ethylene-vinyl acetate-glycidyl methacrylate copolymer (mass%) | - | - | - | - | - | - | - | 1.5 | 0.82 | 0.55 | - | - | - | - |
| Organic salt compound ε | Tetrabutylphosphonium dodecylbenzenesulfonate (mass%) | 1.4 | 1.9 | 1.0 | 1.2 | 1.4 | 1.4 | 1.4 | 1.4 | 0.82 | 0.55 | - | - | - | 1.4 |
| Content of resin β with respect to 100 parts by mass of resin α (parts by mass) | | 70 | 26 | 158 | 70 | 70 | 70 | 70 | 74 | 73 | 73 | 67 | 67 | | 70 |

(continued)

| | Example 1 | Example 2 | Example 3 | Example 4 | Example 5 | Example 6 | Example 7 | Example 8 | Example 9 | Example 10 | Example 11 | Example 12 | Comparative Example 1 | Reference Example |
|---|---|---|---|---|---|---|---|---|---|---|---|---|---|---|
| Content of metal compound particles γ with respect to 100 parts by mass of total content of resin a and resin β (parts by mass) | 103 | 104 | 102 | 155 | 103 | 103 | 103 | 106 | 246 | 423 | 100 | 100 | | 103 |
| Moisture absorption rate (%) | 3 | 3 | 2 | 1 | 3 | 1 | 1 | 3 | 1 | 1 | 2 | 3 | 20 | |
| Toughness of filament | B | | | | | B | B | A | | | | | | |
| Water-solubility of filament (%) | 17 Shape retention | | | | | | | 15 Shape retention | | | | | | |
| Shape retaining property after sintering | B | A | B | A | B | A | A | A | A | A | B | B | | |
| Residual organic content after ignition (%) | 0 | 1 | 4 | 1 | 0 | 0 | 1 | 1 | 0 | 0 | 0 | 1 | | 22 |

[Example 13]

The filament of the composite material 1 was supplied to a fused deposition molding 3D printer manufactured by Makerbot, Replicator2X, and extruded from a heated nozzle having a temperature of 245°C. It was confirmed that discharge of the filament was possible without clogging of the nozzle and the molten filament was immediately solidified.

[Example 14]

The filament of the composite material 8 was supplied to a fused deposition molding 3D printer manufactured by Makerbot, Replicator2X, and extruded from a heated nozzle having a temperature of 245°C. It was confirmed that discharge of the filament was possible without clogging of the nozzle and the molten filament was immediately solidified.

[Example 15]

To a small injection molding machine HAAKE MINIJET PRO manufactured by Thermo SCIENTIFIC, 7 g of the powder of the composite material 4 was supplied and subjected to injection molding using a mold of 80 mm × 10 mm × 4 mm at a mold temperature of 80°C, a cylinder temperature of 230°C, an injection pressure of 700 bar for 5 seconds, and a post pressure of 700 bar for 5 seconds to obtain an injection-molded body of 80 mm × 10 mm × 4 mm of the composite material 4 without discharge failure at the time of injection.

The evaluation results of Examples 1 to 12 and Reference Example suggest that the residual organic content after ignition can be reduced by delipidization using water. From these results, it is considered that the purity of the metal-compound three-dimensional object after sintering can be improved. From the evaluation results of Examples 13 to 15, the composite material obtained in the present invention not only has high moisture resistance but also can be molded by hot melting. Furthermore, it is suggested that when the resin α is removed in the delipidization step, the shape of the entire structure constructed with the resin β is not affected.

## Claims

1. A composite material comprising:

    a resin α including an aromatic dicarboxylic acid monomer unit A having a hydrophilic group and a dicarboxylic acid monomer unit B having no hydrophilic group;
    a resin β that is a resin other than the resin α; and
    metal compound particles γ,
    wherein a content of the metal compound particles γ is 50 parts by mass or more and 500 parts by mass or less with respect to 100 parts by mass of a total content of the resin α and the resin β.

2. The composite material according to claim 1, further comprising a resin δ that has a functional group capable of reacting with the resin α or the resin β and is different from both the resin α and the resin β.

3. The composite material according to claim 1 or 2, wherein a content of the resin β is 1 part by mass or more and 500 parts by mass or less with respect to 100 parts by mass of the resin α in the composite material.

4. The composite material according to any one of claims 1 to 3, wherein a content of the resin α in the composite material is 1 mass% or more and 80 mass% or less.

5. The composite material according to any one of claims 1 to 4, wherein a content of the resin β in the composite material is 1 mass% or more and 50 mass% or less.

6. The composite material according to any one of claims 1 to 5, wherein a content of the metal compound particles γ in the composite material is 10 mass% or more and 95 mass% or less.

7. The composite material according to any one of claims 1 to 6, comprising an organic salt compound ε represented by General Formula (3) described below:

$$(R\text{-}SO_3^-)nQ^{n+} \qquad (3)$$

wherein R represents a hydrocarbon group that may have a substituent and has 1 to 30 carbon atoms, $Q^{n+}$ represents a cation, and n represents a number of 1 or 2.

**8.** The composite material according to any one of claims 1 to 7, wherein the metal compound particles γ contain a metal compound γ.

**9.** The composite material according to claim 8, wherein the metal compound γ is one or more selected from the group consisting of metals, metal oxides, and metal salts.

**10.** The composite material according to claim 8 or 9, wherein a content of the metal compound γ in the metal compound particles γ is 70 mass% or more and 100 mass% or less.

**11.** The composite material according to any one of claims 1 to 10, wherein an aromatic dicarboxylic acid A from which the aromatic dicarboxylic acid monomer unit A is derived is one or more selected from the group consisting of aromatic dicarboxylic acids having a hydrophilic group.

**12.** The composite material according to any one of claims 1 to 11, wherein a dicarboxylic acid B from which the dicarboxylic acid monomer unit B is derived is one or more selected from the group consisting of aromatic dicarboxylic acids having no hydrophilic group and aliphatic dicarboxylic acids having no hydrophilic group.

**13.** The composite material according to any one of claims 1 to 12, wherein a molar ratio of the aromatic dicarboxylic acid monomer unit A to the dicarboxylic acid monomer unit B (the aromatic dicarboxylic acid monomer unit A/the dicarboxylic acid monomer unit B) in the resin α is 10/90 or more and 60/40 or less.

**14.** The composite material according to any one of claims 1 to 13, wherein the resin α includes a monomer unit C derived from a monomer having two functional groups reactive with a carboxy group.

**15.** The composite material according to any one of claims 1 to 14, wherein the monomer unit C is a diol monomer unit.

**16.** A method for producing a three-dimensional object containing a metal compound, the method comprising:

a molding step of molding the composite material according to any one of claims 1 to 15 to obtain a composite material molded body; and
a removing step of removing the resin α from the composite material molded body by bringing the composite material molded body into contact with neutral water.

**17.** The method according to claim 16, wherein the molding step includes a layering step of layering the composite material according to any one of claims 1 to 15 to obtain a composite material molded body.

**18.** The method according to claim 17, wherein the layering step is a fused deposition molding step of layering the composite material by fused deposition molding to obtain a composite material molded body.

**19.** A method for producing a metal-compound three-dimensional object, the method comprising sintering a three-dimensional object containing a metal compound obtained by the method for producing a three-dimensional object containing a metal compound according to any one of claims 16 to 18.

**20.** Use of the composite material according to any one of claims 1 to 15 as a raw material for production of a three-dimensional object containing a metal compound.

**21.** Use of the composite material according to any one of claims 1 to 15 for production of a metal-compound three-dimensional object.

**INTERNATIONAL SEARCH REPORT**

International application No.
**PCT/JP2022/008516**

**A. CLASSIFICATION OF SUBJECT MATTER**

***B22F 10/10***(2021.01)i; ***B22F 1/102***(2022.01)i; ***B29C 64/106***(2017.01)i; ***B29C 64/314***(2017.01)i; ***B29C 64/336***(2017.01)i; ***B29C 64/35***(2017.01)i; ***B29C 64/40***(2017.01)i; ***B33Y 10/00***(2015.01)i; ***B33Y 40/00***(2020.01)i; ***B33Y 40/20***(2020.01)i; ***B33Y 70/10***(2020.01)i

FI: B22F10/10; B22F1/102; B29C64/106; B29C64/314; B29C64/336; B29C64/35; B29C64/40; B33Y10/00; B33Y40/00; B33Y40/20; B33Y70/10

According to International Patent Classification (IPC) or to both national classification and IPC

**B. FIELDS SEARCHED**

Minimum documentation searched (classification system followed by classification symbols)

B22F10/10; B22F1/102; B29C64/106; B29C64/314; B29C64/336; B29C64/35; B29C64/40; B33Y10/00; B33Y40/00; B33Y40/20; B33Y70/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2020-501941 A (DESKTOP METAL, INC.) 23 January 2020 (2020-01-23) claims | 1-21 |
| Y | WO 2018/139537 A1 (KAO CORP) 02 August 2018 (2018-08-02) claims | 1-21 |
| A | JP 2018-24850 A (KAO CORP) 15 February 2018 (2018-02-15) claims | 1-21 |
| A | WO 2016/125860 A1 (KAO CORP) 11 August 2016 (2016-08-11) claims | 1-21 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 April 2022** | **17 May 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/008516**

| Patent document cited in search report | Publication date (day/month/year) | Patent family member(s) | Publication date (day/month/year) |
|---|---|---|---|
| JP 2020-501941 A | 23 January 2020 | WO 2018/112263 A1 claims | |
| | | US 2018/0162044 A1 | |
| | | US 2018/0162047 A1 | |
| | | US 2018/0162048 A1 | |
| | | US 2021/0283688 A1 | |
| | | US 2018/0304359 A1 | |
| | | US 2018/0304360 A1 | |
| | | US 2018/0304361 A1 | |
| | | US 2018/0307210 A1 | |
| | | US 2018/0348739 A1 | |
| | | US 2019/0193159 A1 | |
| | | US 2019/0210109 A1 | |
| | | WO 2018/200382 A1 | |
| | | WO 2018/200590 A1 | |
| | | CN 110312582 A | |
| | | TW 201945153 A | |
| WO 2018/139537 A1 | 02 August 2018 | US 2020/0055232 A1 claims | |
| | | EP 3575065 A1 | |
| | | CN 108698330 A | |
| | | AU 2018213599 A | |
| | | CA 3052023 A1 | |
| | | KR 10-2019-0111070 A | |
| | | BR 112019015702 A | |
| JP 2018-24850 A | 15 February 2018 | US 2019/0160732 A1 claims | |
| | | EP 3492511 A1 | |
| | | CN 109476840 A | |
| WO 2016/125860 A1 | 11 August 2016 | US 2018/0009160 A1 claims | |
| | | EP 3254836 A1 | |
| | | CA 2974719 A1 | |
| | | AU 2016216355 A | |
| | | CN 107206673 A | |
| | | KR 10-2017-0115558 A | |
| | | BR 112017016098 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010202928 A
- JP 2018536770 T
- JP 2020501022 T